# EUROPÄISCHE PATENTSCHRIFT

(11) **EP 0 881 421 B1**
(45) Veröffentlichungstag und Bekanntmachung des Hinweises auf die Patenterteilung: **18.12.2002**
(21) Anmeldenummer: 98105262.4
(22) Anmeldetag: 24.03.1998
(51) Int. Cl.: F16L 37/084

(54) **Steckkupplung für Druckmittelsysteme**
Plug coupling for pressurised fluid systems
Raccord emboîtable pour systèmes à fluide sous pression

(30) Priorität: 27.05.1997 DE 19722039
(43) Veröffentlichungstag der Anmeldung: 02.12.1998
(73) Patentinhaber: Voss Fluid GmbH + Co. KG, 51688 Wipperfürth (DE)
(72) Erfinder: Hester, Hilmar, 51688 Wipperfürth (DE)
(74) Vertreter: Zapf, Christoph, Dipl.-Ing.

(56) Entgegenhaltungen:
- EP-A- 0 373 920
- GB-A- 1 533 785

## Beschreibung

Die vorliegende Erfindung betrifft eine Steckkupplung für Druckmittelsysteme gemäß dem Oberbegriff des Patentanspruchs 1 bzw. des Patentanspruchs 3.

Eine derartige Steckkupplung ist einerseits aus der EP-A-0 373 920 und andererseits aus der GB-A-1 533 785 jeweils bekannt. Dabei ist jeweils ein aus mehreren einzelnen Ringsegmenten bestehendes Halteelement innerhalb des Gehäuseteils gelagert, wobei die Ringsegmente von einem ringförmigen Federelement umschlossen sind und dadurch mit einer radial nach innen wirkenden Federkraft beaufschlagt sind. Dadurch werden beim Steckvorgang die Ringsegmente vom Steckerteil radial nach außen gedrängt, bis sie durch die Federkraft wieder radial nach innen bewegt werden und eine Raststufe des Steckerteils formschlüssig rastend hintergreifen. Zum Lösen des Steckerteils ist ein axial verschiebbares, hülsenförmiges Löseelement vorgesehen, mit dem die Ringsegmente radial nach außen bewegt werden können, bis sie das Steckerteil freigeben. Mit diesen bekannten Ausführungen ist nicht unter allen denkbaren Betriebsbedingungen sichergestellt, dass es nicht zu einem ungewollten Lösen des Steckerteils kommen kann. Problematisch sind in dieser Hinsicht vor allem Druckschwankungen bzw. impulsartige Druckspitzen des inneren Systemdrucks.

Weitere Arten von Steckkupplungen sind hinlänglich aus zahlreichen Veröffentlichungen bekannt. Lediglich beispielsweise seien hier die GB-A-799 155 und die EP-B-0 005 865 genannt. Gemäß der erstgenannten Veröffentlichung ist ein Haltering in einer Umfangsnut am Steckerteil vormontiert. Beim Einstecken wird der Haltering elastisch radial nach innen über eine Innenkonusfläche im Mündungsbereich der Aufnahmeöffnung des Gehäuseteils verformt, d.h. in sich verengt. Die zweitgenannte Veröffentlichung beschreibt Ausführungen, wobei ein Haltering bzw. eine Halteklammer in einer inneren Gehäuseausnehmung sitzt und beim Einstecken des Steckers über einen an dessen Ende vorgesehenen Außenkonus radial gespreizt wird, bis er nachfolgend in eine Außenringnut des Steckers einrastet. Bei solchen bekannten Steckkupplungen besteht das Problem, daß bei Auslegung für hohe Systemdrücke das Halteelement auch entsprechend stark - insbesondere mit großem Querschnitt - dimensioniert sein muß, um hinreichend hohe Haltekräfte gegen Lösen des Steckerteils zu gewährleisten. Dies führt aber nachteiligerweise aufgrund von großen zum Verformen des jeweiligen Halteelementes erforderlichen radialen Kräften auch zu sehr hohen zum Einstecken erforderlichen Steckkräften, die z.T. sogar ein Stecken von Hand unmöglich machen.

Der vorliegenden Erfindung liegt die Aufgabe zugrunde, eine Steckkupplung der genannten Art so zu verbessern, dass einerseits relativ hohe Haltekräfte bei gleichzeitig derart relativ geringen Steckkräften gewährleistet sind, dass auch bei Auslegung für hohe Drücke ein manuelles Stecken leicht möglich ist, und andererseits unter allen in der Praxis auftretenden Betrlebsbedingung eine hohe Sicherheit gegen ungewolltes Lösen des Steckerteils gewährleistet ist.

Erfindungsgemäß wird dies durch spezielle Sperrmittel zum selbsttätig fixierenden Halten des Halteelementes in seiner die Raststufe hintergreifenden Arretierstellung im Falle einer Beaufschlagung des Steckerteils mit einer axial in Löserichtung wirkenden, durch mechanischen Zug und/oder durch innere Druckbeaufschlagung entstehenden Kraft erreicht, wobei die Sperrmittel in einer ersten erfindungsgemäßen Lösung entsprechend dem Patentanspruch 1 ausgebildet sind oder in einer zweiten erfindungsgemäßen Lösung entsprechend dem Patentanspruch 3. Zudem können auch beide Varianten der erfindungsgemäßen Sperrmittel in Kombination miteinander vorgesehen sein.

Durch die erfindungsgemäßen Sperrmittel wird das Halteelement im Betriebszustand sicher in seiner Arretierstellung fixiert, wodurch eine hohe Sicherheit gegen ungewolltes Lösen erreicht wird. Dabei werden die grundsätzlichen Vorteile der Ringsegment-Ausführung des Halteelementes beibehalten. So können die einzelnen Ringsegmente selbst relativ unelastisch und formstabil ausgebildet sein, und zwar vorzugsweise mit einem im wesentlichen rechteckigen bzw. viereckigen Ringquerschnitt (im Radialschnitt gesehen). Hierdurch kann eine außerordentlich hohe Haltekraft erreicht werden, wohingegen die Steckkraft vorteilhaft gering ist, weil bei der radialen Bewegung der einzelnen Ringsegmente nur die radiale Federkraft des Federringelementes wirkt (von Reibung abgesehen). Die Steckkraft wird somit nur durch das Federringelement bestimmt, welches vorteilhafterweise relativ weich, d.h. mit geringer Radialkraft, ausgebildet sein kann. Damit ist die Steckkraft völlig unabhängig von der Größe des Ringquerschnittes des Halteelementes. Außerdem wird ein optimales Rastverhalten erreicht, indem jedes Ringsegment sich gänzlich exakt radial bewegt, ohne sich selbst elastisch zu verformen.

Weitere vorteilhafte Ausgestaltungsmerkmale der Erfindung sind in den von den unabhängigen Ansprüchen 1 und 3 jeweils abhängigen Ansprüchen sowie der folgenden Beschreibung enthalten.

Anhand der Zeichnung soll im folgenden die Erfindung näher erläutert werden. Dabei zeigen:
- Fig. 1: einen Längsschnitt durch eine Steckkupplung in einer ersten, nicht erfindungsgemäßen Ausführungsform, wobei in der oberen Figurenhälfte die Arretierstellung und in der unteren Figurenhälfte eine Stellung zum Lösen des Steckerteils veranschaulicht sind,
- Fig. 2: einen stark vergrößerten Querschnitt in der Ebene II-II gemäß Fig. 1,
- Fig. 3: eine Draufsicht eines Halteelementes in einer ersten Ausführungsform (entsprechend Fig. 1 und 2),
- Fig. 4: einen Radialschnitt in der Ebene IV-IV gemäß Fig. 3,
- Fig. 5: eine Darstellung analog zu Fig. 3 einer zweiten Ausführungsform eines Halteelementes,
- Fig. 6: einen Schnitt analog zu Fig. 4 der zweiten Ausführungsform des Halteelementes in der Ebene VI-VI gemäß Fig. 5,
- Fig. 7: einen Längsschnitt analog zu Fig. 1 einer Einzelkomponente des Gehäuseteils mit einem integrierten Aufnahmekäfig für das Halteelement,
- Fig. 8: einen Querschnitt in der Ebene VIII-VIII gemäß Fig. 7,
- Fig. 9: einen Längsschnitt durch eine Steckkupplung analog zu Fig. 1, jedoch in einer alternativen Ausführungsform,
- Fig. 10: eine erfindungsgemäße Ausführung der Steckkupplung wiederum im Längsschnitt analog zu Fig. 1 bzw. 9,
- Fig. 11: eine vergrößerte Draufsicht des Halteelementes in der Ausführungsform nach Fig. 10,
- Fig. 12: einen Radialschnitt in der Ebene XII-XII gemäß Fig. 11,
- Fig. 13: einen Längsschnitt analog zu Fig. 7 einer Gehäuseteil-Komponente in der Ausführungsform der Fig. 10,
- Fig. 14: eine Ansicht analog zu Fig. 11, jedoch in einer vorteilhaften Weiterbildung dieser Ausführungsform,
- Fig. 15: Einzelteile der Ausführungsform nach Fig. 14,
- Fig. 16 bis 20: jeweils im Teil-Längsschnitt eine erfindungsgemäße Steckkupplung in einer vorteilhaften Ausgestaltung in verschiedenen Zuständen vor und während des Einsteckens, im gesteckten Zustand sowie beim Lösen des Steckerteils.

In den verschiedenen Figuren der Zeichnung sind gleiche Teile stets mit den gleichen Bezugszeichen versehen und werden daher in der Regel jeweils nur einmal beschrieben.

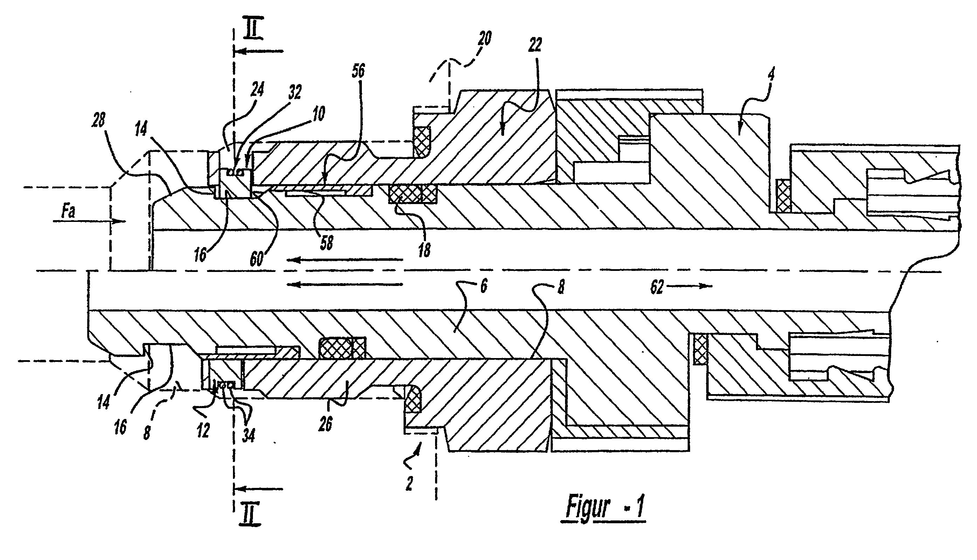

Eine Steckkupplung besteht in allen Ausführungsformen aus zwei Kupplungsteilen, nämlich einem Gehäuseteil 2 und einem Steckerteil 4. Das Steckerteil 4 ist mit einem im wesentlichen zylindrischen Steckerschaft 6 umfangsgemäß abgedichtet in eine Aufnahmeöffnung 8 des Gehäuseteils 2 einsteckbar und im eingesteckten Zustand über eine Verriegelungseinrichtung 10 gegen Lösen arretierbar. Hierzu weist die Verriegelungseinrichtung 10 ein in radialer Richtung elastisch verformbares Halteelement 12 auf, das auf der Seite des einen Kupplungsteils - im dargestellten Ausführungsbeispiel des Gehäuseteils 2 - gelagert ist und zum Arretieren des Steckerteils 4 im eingesteckten Zustand eine Raststufe 14 des anderen Kupplungsteils - wie dargestellt bevorzugt des Steckerteils 4 bzw. des Steckerschaftes 6 - formschlüssig rastend hintergreift. Dieser Verriegelungszustand ist beispielsweise in Fig. 1 in der oberen Zeichnungshälfte dargestellt.

Vorzugsweise ist die Raststufe 14 durch eine Außenringnut 16 am Steckerschaft 6 gebildet. Diese Außenringnut 16 weist einen zylindrischen Nutgrund auf, der auf der in Einsteckrichtung weisenden Seite in eine die Raststufe 14 bildende Flankenfläche übergeht. Um eine rein formschlüssige Arretierung zu gewährleisten, schließt der Nutgrund mit der Raststufe 14 einen Winkel von maximal 90° ein. Zur umfangsgemäßen Abdichtung sitzt eine Umfangsdichtung 18 in einer weiteren Ringnut des Steckerschaftes 6.

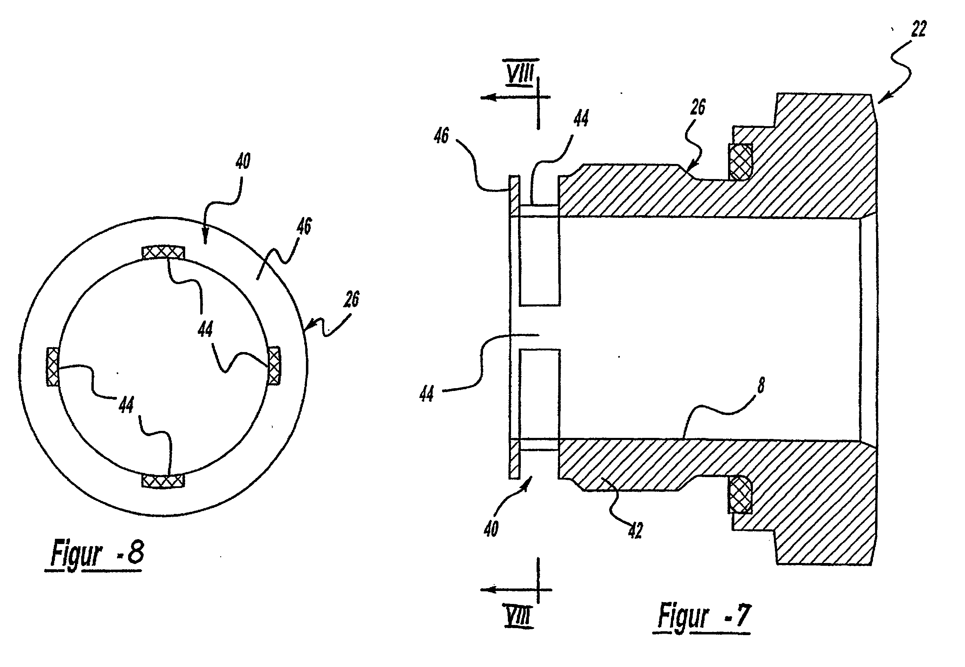

Um insbesondere eine einfache und schnelle Montierbarkeit der Einzelteile, vor allem des Halteelementes 12, zu gewährleisten, besteht in den bevorzugten Ausführungsformen das Gehäuseteil 2 aus zwei lösbar miteinander verbundenen Teilen, und zwar aus einem Basisteil 20 und einem Verschlußteil 22. Das Basisteil 20 und das Verschlußteil 22 begrenzen gemeinsam eine Kammer 24 zur bereichsweisen Aufnahme des Halteelementes 12. Das Verschlußteil 22 kann - wie dargestellt - als ein im wesentlichen hohlzylindrisches und dabei einen Teil der Aufnahmeöffnung 8 bildendes, bereichsweise in eine Öffnung des Basisteils 20 einsetzbares Einsatzteil 26, beispielsweise in Form einer Überwurfschraube, ausgebildet sein. Hierzu wird beispielsweise auch auf die gesonderte Darstellung dieses Einsatzteils 26 in Fig. 7, 13 und 15 verwiesen. Die Ausgestaltung des Verschlußteils 22 ist jedoch grundsätzlich beliebig. So kann dieses Teil auch über andere geeignete Verbindungsmittel mit dem Basisteil 20 verbunden sein, beispielsweise über eine Rastverbindung und/oder eine Bajonettverbindung. Ferner kann das Verschlußteil 22 auch beliebig deckelartig, beispielsweise in Form einer ebenen Verschlußplatte, ausgebildet sein (vgl. hierzu z.B. die DE 39 25 293 C2 und die DE 38 10 385 A1). Dabei kommt es stets nur darauf an, die Aufnahmekammer für das Halteelement zu verschließen und durch eine Demontage und/oder eine Lageveränderung des Verschlußteils die Montage/Demontage des Halteelementes (ggf. zusammen mit dem Stecker) zu ermöglichen.

Zum radialelastischen Spreizen des Halteelementes 12, welches bereichsweise in die Aufnahmeöffnung 8 und damit in den Querschnittsbereich des Steckerschaftes 6 hineinragt, weist das Steckerteil 4 am freien Ende des Steckerschaftes 6 eine Außenkonusfläche 28 auf.

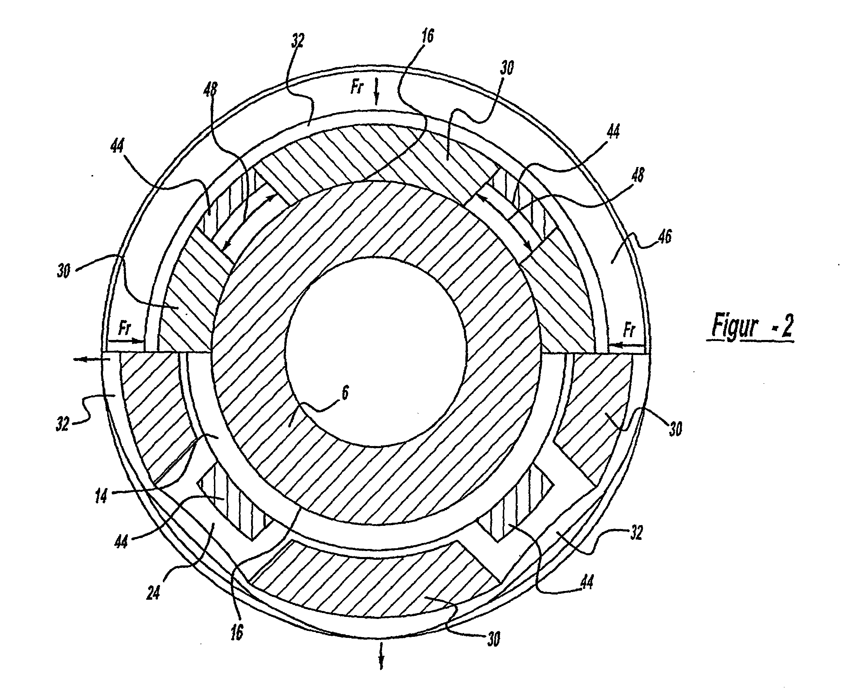

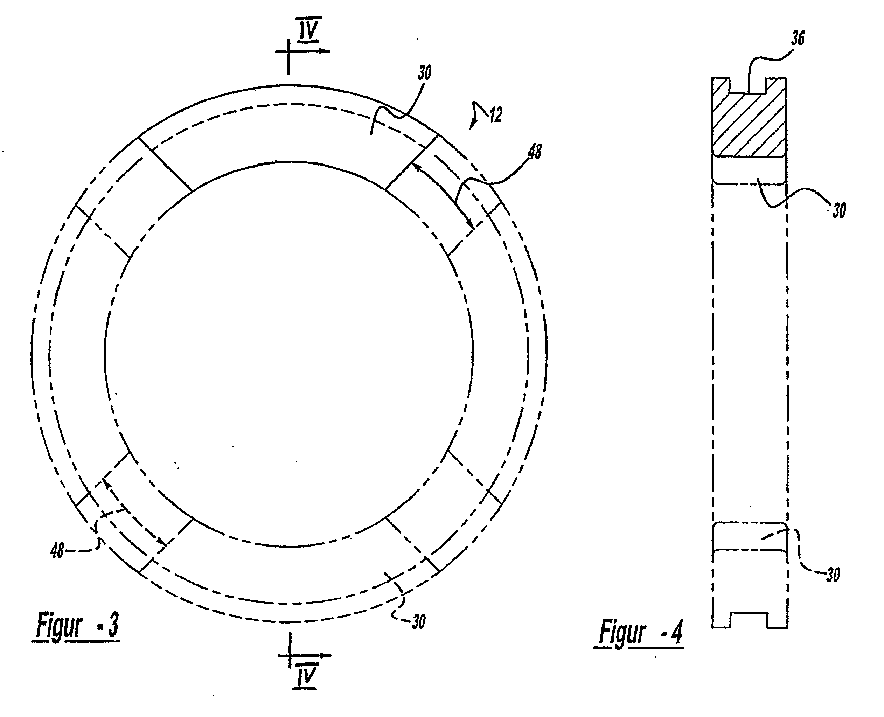

Wie sich nun beispielsweise aus Fig. 2 und 3 ergibt, ist vorgesehen, daß das Halteelement 12 kreisringförmig ausgebildet ist und dabei derart aus mehreren einzelnen Ringsegmenten 30 sowie einem konzentrischen, die Ringsegmente 30 mit radial wirkender Federkraft Fᵣ beaufschlagenden Federringelement 32 besteht, daß beim Steckvorgang - siehe hierzu insbesondere Fig. 2, untere Hälfte - jedes Ringsegment 30 insgesamt radial gegen die Federkraft Fᵣ des Federringelementes 32 beweglich ist. Dies bedeutet, daß die Ringsegmente 30 beim Einstecken des Steckerteils 4 zunächst so gegen die Federkraft Fᵣ verdrängt (im dargestellten Beispiel bevorzugt nach außen bewegt) werden, daß der Steckerschaft 6 weiter eingesteckt werden kann. Nachfolgend können sich dann die Ringsegmente 30 aufgrund der Federkraft Fᵣ wieder radial zurückbewegen, bis sie die Raststufe 14 rastend formschlüssig hintergreifen.

Wie sich beispielsweise aus Fig. 4 ergibt, weisen die einzelnen Ringsegmente 30 bevorzugt einen im wesentlichen rechteckigen Ringquerschnitt auf (im Radialschnitt gesehen). Dadurch sind die einzelnen Ringsegmente 30 selbst relativ unelastisch und formstabil ausgebildet, so daß sie sich beim Steckvorgang selbst praktisch nicht verformen, sondern nur gänzlich radial bewegen (bezogen jeweils auf ihre radiale, mittige Symmetrielinie).

Das elastische Federringelement 32 kann von mindestens einem Drahtfederring, Schraubenfederring, gummielastischen Formring oder dergleichen gebildet sein. Unter einem Schraubenfederring ist eine gewickelte Schraubenfeder mit einem torusförmigen Verlauf zu verstehen. In der Ausführungsform nach Fig. 1 besteht das Federringelement 32 beispielhaft aus zwei O-Ringen 34 aus gummielastischem Material, beispielsweise aus einem für Dichtungsringe üblichen Kunststoff.

Zweckmäßigerweise besteht das Halteelement 12 aus mindestens drei, in den dargestellten Ausführungsformen insbesondere vier, radialsymmetrisch ausgebildeten und angeordneten Ringsegmenten 30.

In den bevorzugten Ausführungsformen, wobei das Halteelement 12 im Gehäuseteil 2 gelagert ist und radial nach innen in Richtung des Steckerschaftes 6 einrastet, ist vorgesehen, daß das Federringelement 32 die Ringsegmente 30 außen koaxial umschließt, so daß die radiale Federkraft Fᵣ radial nach innen gerichtet ist.

Wie sich beispielsweise aus Fig. 1, 3 und 4 ergibt, können die einzelnen Ringsegmente 30 aus einem Vollmaterial, insbesondere aus Kunststoff oder Metall, bestehen. Bei dieser Ausführungsform ist es vorteilhaft, wenn die Ringsegmente 30 auf ihrer radial nach außen weisenden Fläche jeweils eine in Umfangsrichtung verlaufende Aufnahmenut 36 für das Federringelement 32 aufweisen; siehe hierzu Fig. 4.

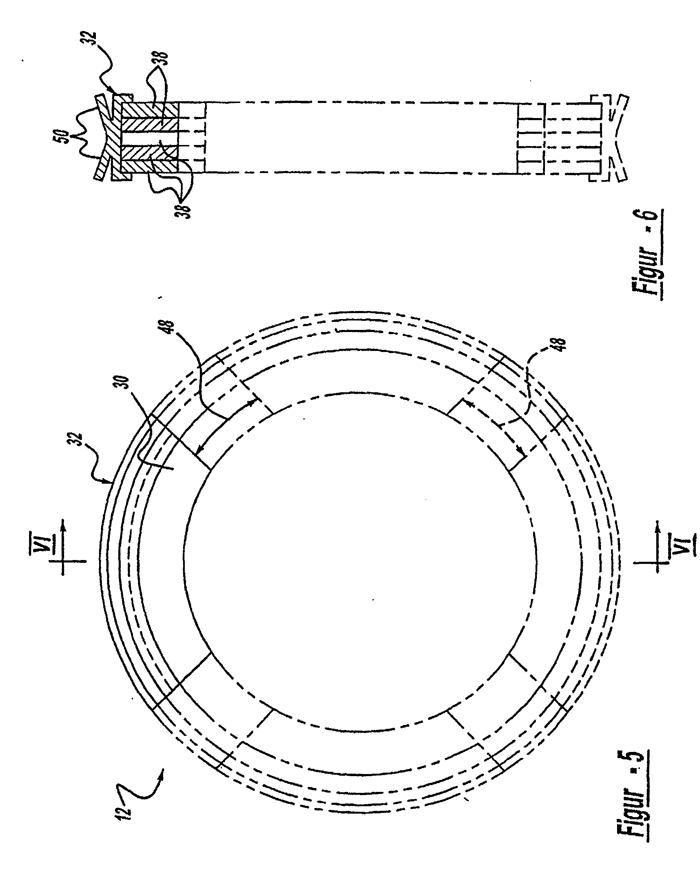

Alternativ dazu ist in Fig. 5 und 6 beispielhaft dargestellt, daß jedes Ringsegment 30 aus mehreren in Steckrichtung gesehen hintereinanderliegenden Einzelelementen 38 bestehen kann. Diese Einzelelemente 38 sind bevorzugt lamellenförmig ausgebildet und bestehen zweckmäßigerweise aus Metallblech. Bei dieser Ausführungsform ist das Federringelement 32 zweckmäßigerweise als elastischer Profilring ausgebildet, der die lamellenförmigen Einzelelemente 38 radial sowie axial derart umgreift, daß sie in einer paketartigen Anordnung zusammengehalten werden; siehe insbesondere Fig. 6. Vorzugsweise liegen fünf oder sechs gleichartig lamellenförmige Einzelelemente 38 paketartig aneinander.

Aufgrund der Aufteilung des Halteelementes 12 in die mehreren Ringsegmente 30 ist es vor allem für die Montage vorteilhaft, wenn die Ringsegmente 30 in einem Aufnahmekäfig 40 gehaltert sind. Hierbei ist es von besonderem Vorteil, wenn der Aufnahmekäfig 40 integraler Bestandteil des Verschlußteils 22 bzw. des Einsatzteils 26 ist. Hierdurch ergibt sich eine einfache Montage, indem bei gelöstem Einsatzteil 26 die einzelnen Ringsegmente 30 zusammen mit dem Federringelement 32 in den Aufnahmekäfig 40 eingesetzt werden können. Es braucht dann nur noch das Einsatzteil 26 in die entsprechende Aufnahmeöffnung des Basisteils 20 eingesetzt zu werden, um das Halteelement 12 lagerichtig in der Aufnahmeöffnung 8 zu positionieren. Entsprechend umgekehrt ist auch ein Lösen - auch ein Lösen des Steckerteils 4 - möglich, indem das Einsatzteil 26 gemeinsam mit dem Halteelement 12 und ggf. mit dem gesteckten Steckerteil 4 entnommen werden kann.

In dem Ausführungsbeispiel nach Fig. 7 und 8 ist der Aufnahmekäfig 40 durch eine bestimmte Schlitzung im einzusetzenden Endbereich des Einsatzteils 26 gebildet, und zwar im dargestellten Beispiel als Radialschlitzung mit endseitigem radialen Ringsteg 46, bzw. in einer hier nicht dargestellten, fertigungstechnisch bevorzugten Axialschlitzung mit endseitig aufgeclipster Kappe oder federnd gelagertem Sprengring. Wie dargestellt, erstrecken sich ausgehend von dem hohlzylindrischen Außengewindeabschnitt 42 insbesondere vier axiale, gleichmäßig über den Umfang verteilt angeordnete Verbindungsstege 44 bis zu einem endseitigen radialen Ringsteg 46. Gemäß Fig. 2 sind hierbei die einzelnen Ringsegmente 30 des Halteelementes 12 in Umfangsrichtung jeweils zwischen den Verbindungsstegen 44 angeordnet, so daß jeweils zwischen den Ringsegmenten 30 in Umfangsrichtung Zwischenräume 48 für die Verbindungsstege 44 gebildet sind. Hierdurch ergibt sich eine vorteilhafte Möglichkeit zur Zentrierung des Halteelementes 12, indem das Federringelement 32 die Verbindungsstege 44 des Aufnahmekäfigs 40 - bezogen auf die Längsmittelachse - koaxial umschließt. Hierzu wird auf die obere Figurenhälfte der Fig. 2 verwiesen. Bei dem in der unteren Figurenhälfte der Fig. 2 veranschaulichten Steckvorgang werden die Ringsegmente 30 radial nach außen bewegt, so daß das Federringelement 32 von den Verbindungsstegen 44 abgehoben wird und sich dann jeweils zwischen den Ringsegmenten 30 im wesentlichen geradlinig als Sekante seines Ringumfanges erstreckt.

Diese zuletzt beschriebene Ausgestaltung gilt analog auch für die in Fig. 5 und 6 veranschaulichte Ausführungsform des Halteelementes 12. Allerdings ist hier zusätzlich zur Zentrierung vorgesehen, daß das Federringelement 32 radiale, elastisch verformbare Zentrieransatzelemente 50 aufweist, die sich im Gehäuseteil 2 abstützen.

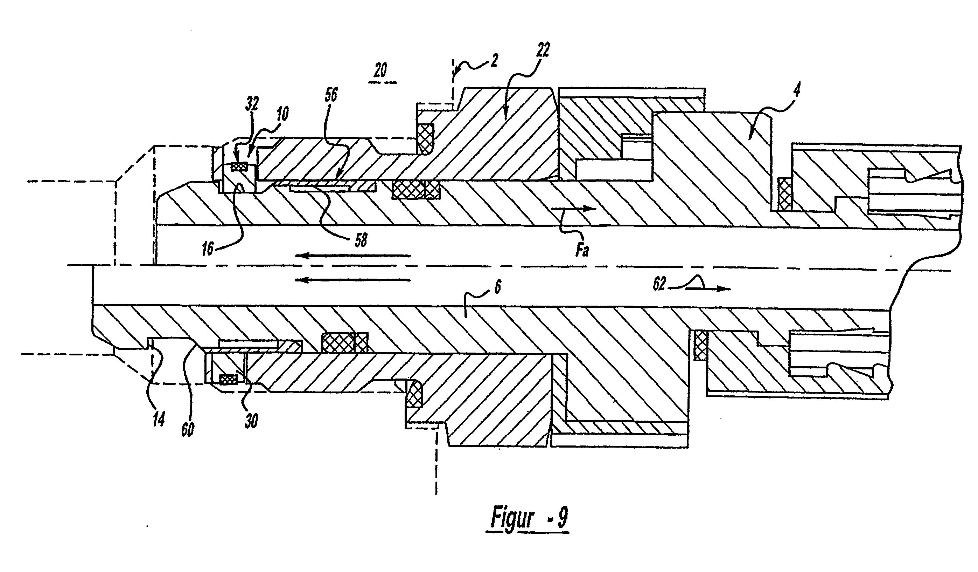

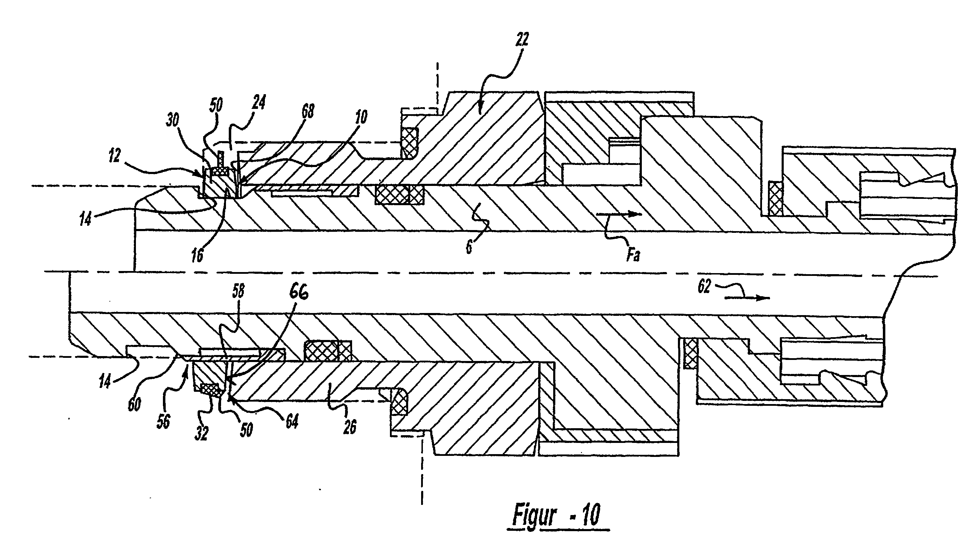

In der Ausführungsform nach Fig. 9 ist das Federringelement 32 mit im wesentlichen rechteckigem Ringquerschnitt aus einem gummielastischen Material ausgebildet. Gemäß Fig. 10 kann hierbei ebenfalls ein radiales, elastisch verformbares Zentrieransatzelement 50 vorgesehen sein, welches sich zwecks Zentrierung des Halteelementes 12 im Gehäuseteil 2 abstützt und während des Steckvorganges - siehe die untere Figurenhälfte der Fig. 10 - durch elastische Verformung ein Spreizen der Ringsegmente 30 gestattet.

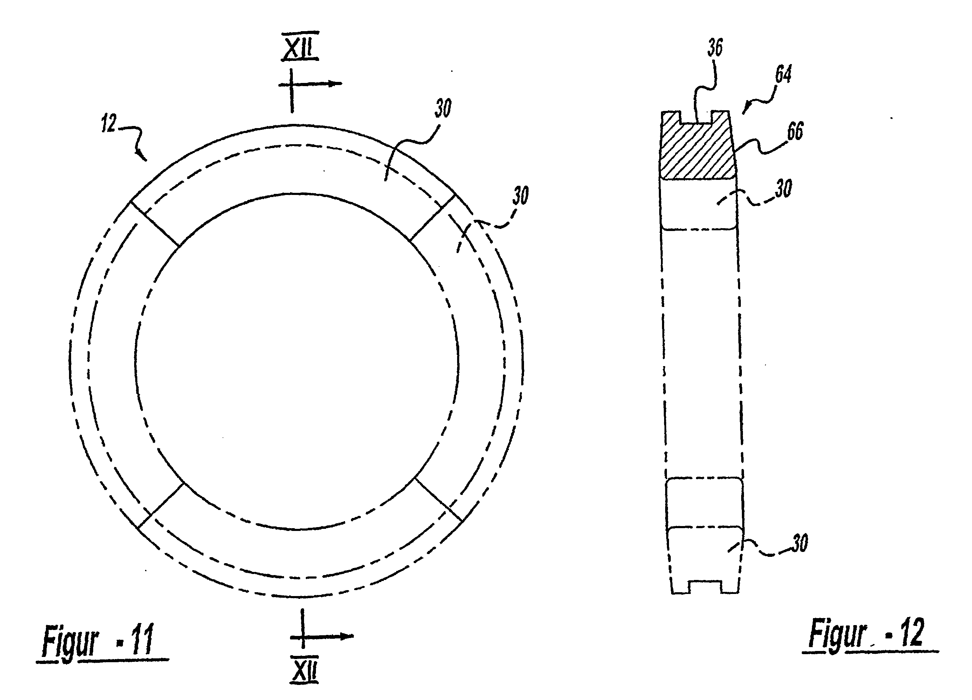

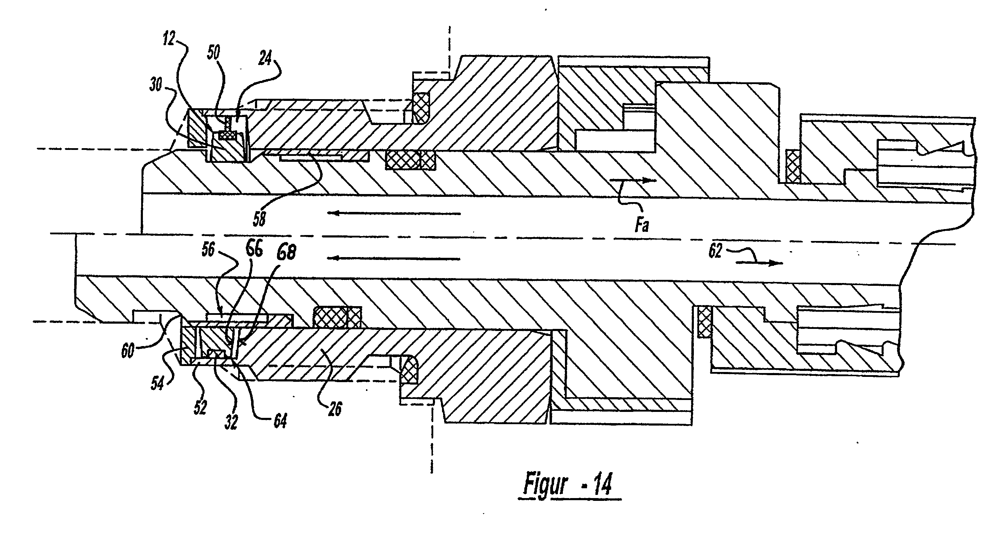

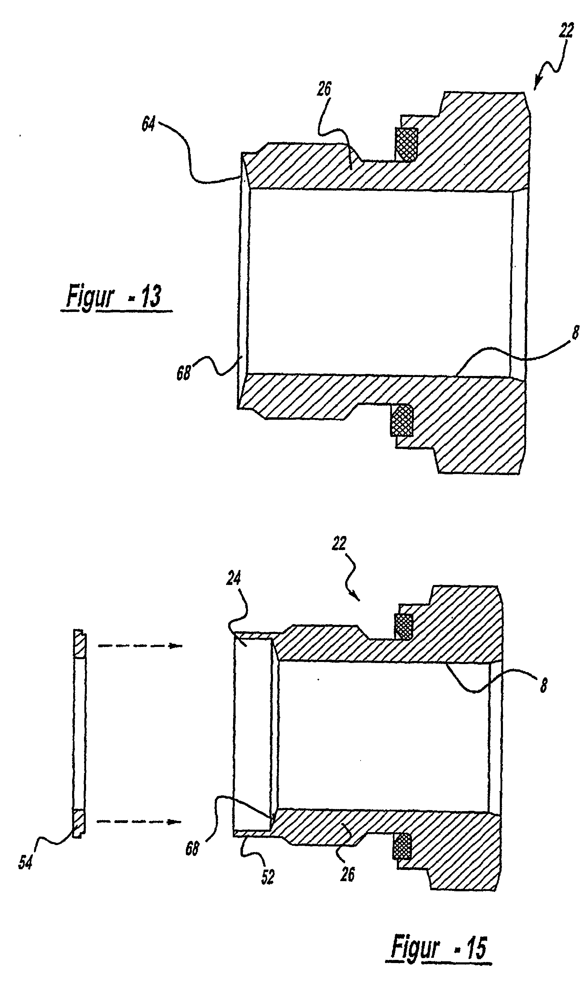

In der Ausführungsform nach Fig. 10 bis 12 ist zudem vorgesehen, daß die Ringsegmente 30 des Halteelementes 12 in Umfangsrichtung praktisch aneinanderliegen bzw. über nur geringfügige Trennspalte voneinander beabstandet sind (s. insbesondere Fig. 11). Hierzu ist die Aufnahmekammer 24 zwischen dem Basisteil 20 und dem Verschlußteil 22 des Gehäuseteils 2 als umfangsgemäß durchgehende innere Ringnut ausgebildet. In der in Fig. 14 und 15 veranschaulichten Weiterbildung ist vorteilhafterweise vorgesehen, die Aufnahmekammer 24 allein durch das Einsatzteil 26 zu bilden. Hierzu weist das Einsatzteil 26 einen hohlzylindrischen Stegabschnitt 52 auf, der die Kammer 24 koaxial außen begrenzt. Auf diesen Stegabschnitt 52 ist zur axialen Begrenzung der Kammer 24 - praktisch als Verschlußdeckel - eine Ringscheibe 54 aufsetzbar. Auch hierbei ergibt sich - analog zu den Ausführungsformen mit Aufnahmekäfig 40 - eine einfache Montage der einzelnen Ringsegmente 30 des Halteelementes 12, indem die Ringsegmente 30 vor der Montage des Einsatzteils 26 in die Kammer 24 eingelegt werden; die Kammer 24 wird dann mit der insbesondere mittels Preßpassung eingepreßten Ringscheibe 54 verschlossen.

Aufgrund des gemäß Fig. 11 praktisch in Umfangsrichtung durchgehenden Ringes, der durch die aneinanderliegenden Ringsegmente 30 gebildet ist, wird eine maximale Haltekraft durch Maximierung der in axialer Richtung tragenden Flächen gewährleistet.

In allen dargestellten, bevorzugten Ausführungsformen ist vorteilhafterweise eine Löseeinrichtung 56 derart vorgesehen, daß ausgehend von der eingesteckten und verriegelten Montagestellung durch weitergehendes Einstecken des Stekkerteils 4 das Halteelement 12 in eine die Raststufe 14 bzw. die Außenringnut 16 freigebende Lösestellung (siehe jeweils die untere Figurenhälfte der Fig. 1, 9, 10 und 14) gebracht und so in dieser Lösestellung gehalten wird, daß das Steckerteil 4 ungehindert aus der Aufnahmeöffnung 8 entnehmbar ist, ohne daß das Halteelement 12 wieder in die Ringnut 16 einrasten könnte. Hierzu weist die Löseeinrichtung 56 einen hülsenförmigen Verschlußschieber 58 für die Ringnut 16 derart auf, daß das Halteelement 12 in der Lösestellung zur radialen Auflage auf dem Verschlußschieber 58 gelangt und dadurch in der Lösestellung gehalten wird und bei der Stecker-Entnahmebewegung die Ringnut 16 von dem Verschlußschieber 58 überdeckt und auf diese Weise gegen Eingreifen des Halteelementes 12 in radialer Richtung verschlossen wird. Dabei ist die Ringnut 16 derart einseitig von einer Schrägfläche 60 begrenzt, daß durch das weitergehende Einstecken des Steckerteils 4 das Haltelement 12 bzw. die Ringsegmente 30 über die Schrägfläche 60 in die Lösestellung gebracht werden. In den bevorzugten Ausführungsformen, wobei das Halteelement 12 im Gehäuseteil 2 gelagert ist, sitzt der Verschlußschieber 58 relativverschiebbar auf dem Steckerschaft 6 des Steckerteils 4. Ausgehend von der jeweils in der unteren Figurenhälfte beispielsweise der Fig. 1 dargestellten Situation kann der Steckerschaft 6 in Pfeilrichtung 62 herausgezogen werden, da dann zunächst der Verschlußschieber 58 in der dargestellten Position stehenbleibt und deshalb die Außenringnut 16 des Steckerschaftes 6 gegen Einrasten der Ringsegmente 30 verschlossen wird. Weitere Einzelheiten dieser speziellen Löseeinrichtung 56 sind auch in der älteren deutschen Patentanmeldung 197 07 371.9 der Anmelderin enthalten; auf diese ältere Anmeldung wird an dieser Stelle in vollem Umfange Bezug genommen.

Gemäß der Erfindung sind spezielle Sperrmittel 64 zum selbsttätig fixierenden Halten des Halteelementes 12 in seiner die Raststufe 14 hintergreifenden Arretierstellung im Falle einer Beaufschlagung des Steckerteils 4 mit einer axial in Löserichtung wirkenden Kraft Fₐ vorgesehen. Diese axiale Kraft Fₐ kann einer mechanischen Zugkraft entsprechen oder aber durch innere Druckbeaufschlagung der Steckkupplung entstehen. In den Ausführungsformen nach Fig. 10 bis 15 bestehen diese Sperrmittel 64 aus schrägen bzw. im wesentlichen konischen und durch axiale Anlage zusammenwirkenden Wirkflächen 66 und 68 des Halteelementes 12 bzw. der Ringsegmente 30 und mindestens eines der beiden Kupplungsteile 2, 4. Dabei sind die Wirkflächen 66, 68 derart ausgerichtet, daß durch die axial in Löserichtung wirkende Kraft Fₐ jedes Ringsement 30 des Halteelementes 12 mit einer radial in Eingriffsrichtung wirkenden Haltekraft beaufschlagt wird. In den bevorzugten Ausführungsbeispielen ist die eine Wirkfläche 66 von einer entsprechend schrägen Stirnfläche des Halteelementes 12 bzw. der Ringsegmente 30 gebildet; siehe inbesondere Fig. 12. Die andere schräge Wirkfläche 68 wird bevorzugt von einer Stufenfläche des Einsatzteils 26 gebildet. Entsprechende, d.h. analog wirkende Wirkflächen können auch auf der axial gegenüberliegenden Seite des Halteelementes 12 und im Bereich der Raststufe 14 vorgesehen sein. Durch diese vorteilhafte Ausgestaltung wird erreicht, daß die radiale Haltekraft praktisch proportional zu der in Löserichtung wirkenden Kraft Fₐ ist, so daß gilt: je höher die Kraft Fₐ ist, desto größer ist auch die radiale Haltekraft, mit der die Ringsegmente 30 in ihrer Arretierstellung gehalten werden.

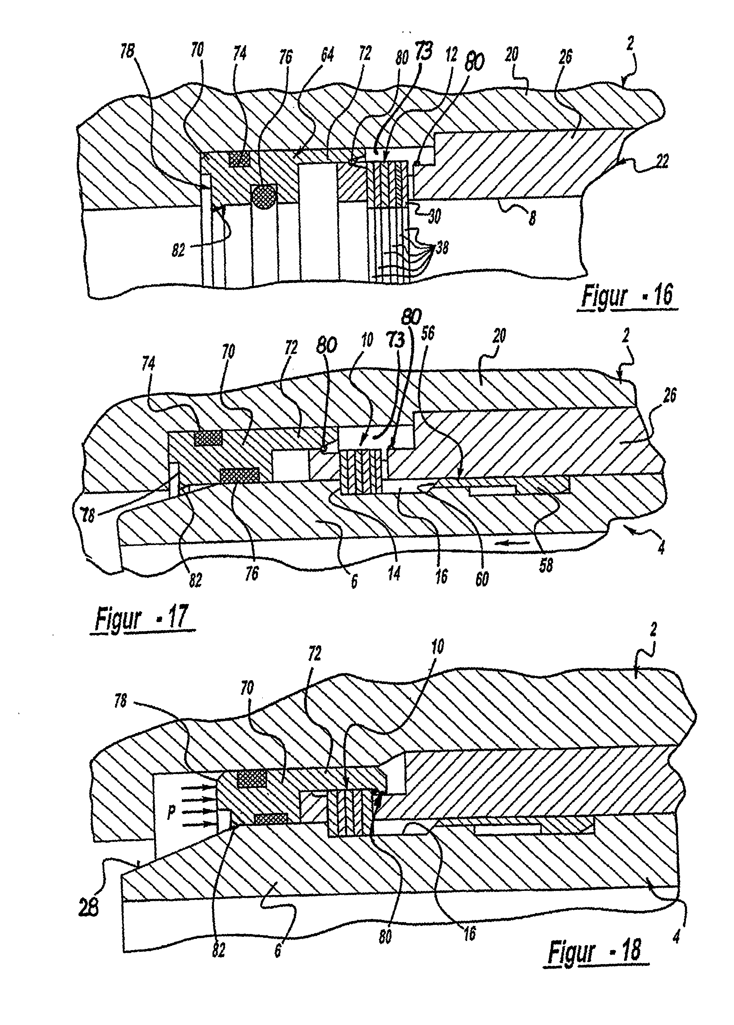

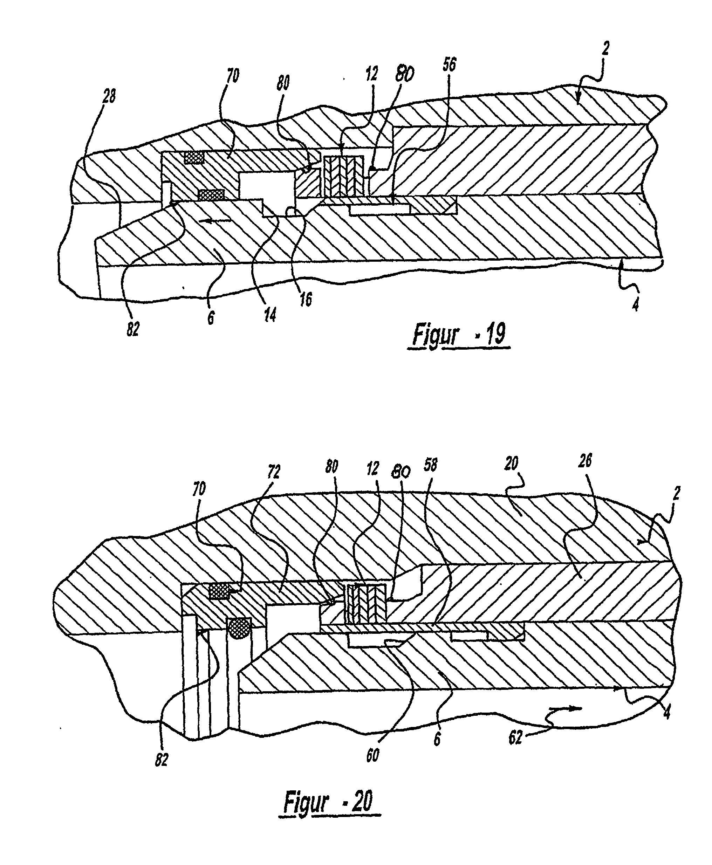

Alternativ - gegebenenfalls aber sogar zusätzlich - zu den als Sperrmittel 64 vorgesehenen schrägen Wirkflächen 66, 68 ist in der Ausführungsform nach Fig. 16 bis 20 als Sperrmittel ein axialverschiebbarer Ringkolben 70 vorgesehen, der durch eine Beaufschlagung mit einem inneren Druck p (vgl. hierzu die in Fig. 16 eingezeichneten Pfeile) derart mit einem hohlzylindrischen Sicherungsabschnitt 72 axial in einen zu dem Halteelement 12 koaxialen Ringspalt 73 hinein verschiebbar ist, daß hierdurch die Ringsegmente 30 des Halteelementes 12 durch radiale Anlage an dem Sicherungsabschnitt 72 des Ringkolbens 70 gegen ihre radiale Lösebewegung gesperrt sind. Der Ringkolben 70 ist außen durch eine erste Dichtung 74 gegen die Aufnahmeöffnung des Gehäuseteils 2 abgedichtet und nach innen gegen den Steckerschaft 6 über eine zweite Dichtung 76. Hierdurch wirkt der innere Systemdruck p in der eingesteckten Montagestellung - siehe Fig. 18 - nur auf die innere Stirnfläche 78 des Ringkolbens 70, wodurch er bei Druckbeaufschlagung axial verschoben wird. Diese Ausführungsform ist vor allem in Kombination mit der oben beschriebenen Löseeinrichtung 56 von Vorteil, da eine hohe Sicherheit gegen ungewolltes Lösen erreicht wird. Vorzugsweise wird der Ringkolben 70 in seiner Sicherungsstellung nach Fig. 18 insbesondere über Rastmittel 80 auch noch im später druckfreien Zustand gehalten. Um dann den Stecker dennoch lösen zu können, weist der Ringkolben 70 ein radial nach innen ragendes Mitnehmerelement 82 auf, welches zur Anlage am Steckerschaft 6 gelangt, so daß bei der zum Lösen erforderlichen, weitergehenden Einsteckbewegung des Stekkerteils 4 der Ringkolben 70 in seine die Ringsegmente 30 freigebende Stellung nach Fig. 19 gebracht wird. Die Ringsegmente 30 des Halteelementes 12 können dann in ihre Löseposition verdrängt werden, so daß nachfolgend gemäß Fig. 20 der Stecker 4 in Pfeilrichtung 62 entnommen werden kann. Die Rastmittel 80 dienen zusätzlich vorteilhafterweise auch dazu, den Ringkolben 70 zwecks Montage an dem Einsatzteil 26 vorzufixieren, und zwar in der Relativstellung nach Fig. 16. Hierdurch kann der Ringkolben 70 gemeinsam mit dem Einsatzteil 26 in das Basisteil 20 eingesetzt werden (unverlierbare Vormontage).

Die Erfindung ist nicht auf die dargestellten und beschriebenen Ausführungsbeispiele beschränkt, sondern umfaßt auch alle im Sinne der Erfindung gleichwirkenden Ausführungen. So ist das erfindungsgemäße Halteelement 12 grundsätzlich auch für Ausführungen geeignet, wobei das Halteelement am Steckerteil 4 vormontiert ist und beim Einstecken über einen Innenkonus des Gehäuseteils 2 die Ringsegmente 30 radial nach innen verdrängt werden, bis sie eine entsprechende Raststufe des Gehäuseteils hintergreifen. Dabei wäre allerdings das Federringelement zur Erzeugung der nach außen wirkenden Federkraft im Inneren des Ringumfanges anzuordnen. Hierfür wäre z.B. ein Drahtfederring durchaus geeignet.

## Patentansprüche

1. Steckkupplung für Druckmittelsysteme, bestehend aus zwei Kupplungsteilen, und zwar einem Gehäuseteil (2) und einem Steckerteil (4), wobei das Steckerteil (4) abgedichtet in eine Aufnahmeöffnung (8) des Gehäuseteils (2) einsteckbar und mittels einer Verriegelungseinrichtung (10) gegen Lösen arretierbar ist, und wobei die Verriegelungseinrichtung (10) ein elastisch verformbares Halteelement (12) aufweist, das auf der Seite des einen Kupplungsteils derart gelagert ist, daß es zum Arretieren des Steckerteils (4) im eingesteckten Zustand eine Raststufe (14) des anderen Kupplungsteils formschlüssig rastend hintergreift, wobei das Halteelement (12) ringförmig ausgebildet ist und derart aus mehreren einzelnen Ringsegmenten (30) sowie einem konzentrischen, die Ringsegmente (30) mit radial wirkender Federkraft (Fᵣ) beaufschlagenden Federringelement (32) besteht, daß beim Steckvorgang jedes Ringsegment (30) radial gegen bzw. durch die Federkraft (Fᵣ) des Federringelementes (32) beweglich ist, wobei Sperrmittel (64) zum selbsttätig fixierenden Halten des Halteelementes (12) in seiner die Raststufe (14) hintergreifenden Arretierstellung im Falle einer Beaufschlagung des Steckerteils (4 ) mit einer axial in Löserichtung wirkenden, durch mechanischen Zug oder durch innere Druckbeaufschlagung entstehenden Kraft (Fₐ) ausgebildet sind **dadurch gekennzeichnet daß** die Sperrmittel (64) aus schrägen bzw. im wesentlichen konischen und durch axiale Anlage zusammenwirkenden Wirkflächen (66, 68) des Halteelementes (12) und des jeweiligen Kupplungsteils (2;4) derart bestehen, daß durch die axial in Löserichtung wirkende Kraft (Fₐ) jedes Ringsegment (30) des Halteelementes (12) über die schrägen Wirkflächen (66, 68) mit einer radialen Haltekraft beaufschlagt wird.

2. Steckkupplung nach Anspruch 1,
**dadurch gekennzeichnet, daß** als zusätzliches Sperrmittel (64) ein axial verschiebbarer Ringkolben (70) vorgesehen ist, der durch innere Druckbeaufschlagung derart mit einem Sicherungsabschnitt (72) axial in einen zum Halteelement (12) koaxialen Ringspalt (73) hinein verschiebbar ist, daß die Ringsegmente (30) des Halteelementes (12) durch radiale Anlage an dem Sicherungsabschnitt (72) des Ringkolbens (70) gegen ihre radiale Lösebewegung gesperrt sind.

3. Steckkupplung für Druckmittelsysteme, bestehend aus zwei Kupplungsteilen, und zwar einem Gehäuseteil (2) und einem Steckerteil (4), wobei das Steckerteil (4) abgedichtet in eine Aufnahmeöffnung (8) des Gehäuseteils (2) einsteckbar und mittels einer Verriegelungseinrichtung (10) gegen Lösen arretierbar ist, und wobei die Verriegelungseinrichtung (10) ein elastisch verformbares Halteelement (12) aufweist, das auf der Seite des einen Kupplungsteils derart gelagert ist, daß es zum Arretieren des Steckerteils (4) im eingesteckten Zustand eine Raststufe (14) des anderen Kupplungsteils formschlüssig rastend hintergreift, wobei das Halteelement (12) ringförmig ausgebildet ist und derart aus mehreren einzelnen Ringsegmenten (30) sowie einem konzentrischen, die Ringsegmente (30) mit radial wirkender Federkraft (Fᵣ) beaufschlagenden Federringelement (32) besteht, daß beim Steckvorgang jedes Ringsegment (30) radial gegen bzw. durch die Federkraft (Fᵣ) des Federringelementes (32) beweglich ist, wobei Sperrmittel (64) zum selbsttätig fixierenden Halten des Halteelementes (12) in seiner die Raststufe (14) hintergreifenden Arretierstellung im Falle einer Beaufschlagung des Steckerteils (4 ) mit einer axial in Löserichtung wirkenden, durch mechanischen Zug oder durch innere Druckbeaufschlagung entstehenden Kraft (Fₐ), ausgebildet sind **dadurch gekennzeichnet daß** als Sperrmittel (64) ein axial verschiebbarer Ringkolben (70) vorgesehen ist, der durch innere Druckbeaufschlagung derart mit einem Sicherungsabschnitt (72) axial in einen zum Halteelement (12) koaxialen Ringspalt (73) hinein verschiebbar ist, daß die Ringsegmente (30) des Halteelementes (12) durch radiale Anlage an dem Sicherungsabschnitt (72) des Ringkolbens (70) gegen ihre radiale Lösebewegung gesperrt sind.

4. Steckkupplung nach Anspruch 3,
**dadurch gekennzeichnet, dass** zusätzliche Sperrmittel (64) aus schrägen bzw. im wesentlichen konischen und durch axiale Anlage zusammenwirkenden Wirkflächen (66, 68) des Halteelementes (12) und des jeweiligen Kupplungsteils (2;4) derart bestehen, daß durch die axial in Löserichtung wirkende Kraft (Fₐ) jedes Ringsegment (30) des Halteelementes (12) über die schrägen Wirkflächen (66, 68) mit einer radialen Haltekraft beaufschlagt wird.

5. Steckkupplung nach einem der Ansprüche 1 bis 4,
**dadurch gekennzeichnet, dass** die einzelnen Ringsegmente (30) selbst relativ unelastisch und formstabil ausgebildet sind, und zwar vorzugsweise mit einem im wesentlichen rechteckigen bzw. viereckigen Ringquerschnitt.

6. Steckkupplung nach einem der Ansprüche 1 bis 5,
**dadurch gekennzeichnet, daß** das Halteelement (12) aus mindestens drei, insbesondere vier, radialsymmetrischen Ringsegmenten (30) besteht.

7. Steckkupplung nach einem der Ansprüche 1 bis 6,
**dadurch gekennzeichnet, daß** das radial elastisch verformbare Federringelement (32) von mindestens einem Drahtfederring, Schraubenfederring, gummielastischen Formring oder dergleichen gebildet ist.

8. Steckkupplung nach einem der Ansprüche 1 bis 7,
**dadurch gekennzeichnet, daß** das Halteelement (12) im Bereich der Aufnahmeöffnung (8) des Gehäuseteils (2) gelagert ist und die Raststufe (14) - insbesondere durch eine Außenringnut (16) - am Steckerteil (4) gebildet ist.

9. Steckkupplung nach Anspruch 8,
**dadurch gekennzeichnet, daß** das Federrlngelement (32) die Ringsegmente (30) umschließt und mit radial nach innen gerichteter Federkraft (Fᵣ) beaufschlagt.

10. Steckkupplung nach einem der Ansprüche 1 bis 9,
**dadurch gekennzeichnet, daß** die einzelnen Ringsegmente (30) aus einem Vollmaterial, insbesondere aus Kunststoff oder Metall, bestehen.

11. Steckkupplung nach Anspruch 10,
**dadurch gekennzeichnet, daß** die Ringsegmente (30) auf ihrer radial nach außen weisenden Fläche jeweils eine in Umfangsrichtung verlaufende Aufnahmenut (36) für das Federringelement (32) aufweisen.

12. Steckkupplung nach einem der Ansprüche 1 bis 9,
**dadurch gekennzeichnet, daß** jedes Ringsegment (30) aus mindestens zwei in Steckrichtung gesehen hintereinanderliegenden Einzelelementen (38) besteht.

13. Steckkupplung nach Anspruch 12,
**dadurch gekennzeichnet, daß** die Einzelelemente (38) lamellenförmig ausgebildet sind und vorzugsweise aus Metall bestehen.

14. Steckkupplung nach Anspruch 12 oder 13,
**dadurch gekennzeichnet, daß** jeweils zwei bis sechs, insbesondere fünf, gleichartig lamellenförmige Einzelelemente (38) paketartig aneinanderliegen.

15. Steckkupplung nach Anspruch 14,
**dadurch gekennzeichnet, daß** das Federringelement (32) als elastischer Profilring ausgebildet ist, der die lamellenförmigen Einzelelemente (38) radial und axial derart umgreift, daß sie in einer paketartigen Anordnung zusammengehalten werden.

16. Steckkupplung nach einem der Ansprüche 1 bis 15,
**dadurch gekennzeichnet, daß** die Ringsegmente (30) in einem Aufnahmekäfig (40) gehaltert sind.

17. Steckkupplung nach einem der Ansprüche 1 bis 16,
**dadurch gekennzeichnet, daß** das Gehäuseteil (2) aus zwei lösbar verbundenen Teilen besteht, und zwar einem Basisteil (20) und einem Verschlußteil (22), wobei diese beiden Teile (20,22) zusammen eine Aufnahmekammer (24) für das Halteelement (12) begrenzen.

18. Steckkupplung nach Anspruch 17,
**dadurch gekennzeichnet, daß** das Verschlußteil (22) als ein im wesentlichen hohlzylindrisches, bereichsweise in eine Öffnung des Basisteils (20) einsetzbares Einsatzteil (26), insbesondere als Überwurfschraube, ausgebildet ist.

19. Steckkupplung nach einem der Ansprüche 16 bis 18,
**dadurch gekennzeichnet, daß** der Aufnahmekäfig (40) integraler Bestandteil des Verschlußteils (22) ist.

20. Steckkupplung nach einem der Ansprüche 16 bis 19,
**dadurch gekennzeichnet, daß** der Aufnahmekäfig (40) durch eine Radialschlitzung mit axialen, über Schlitze getrennten Verbindungsstegen (44) und einem endseitigen Ringsteg (46) gebildet ist.

21. Steckkupplung nach einem der Ansprüche 16 bis 19,
**dadurch gekennzeichnet, daß** der Aufnahmekäfig (40) durch eine Axialschlitzung mit einem endseitig lösbar gehalterten, vorzugsweise aufgeclipsten Ringteil, beispielsweise einer Kappe oder einem Sprengringelement, gebildet ist.

22. Steckkupplung nach einem der Ansprüche 16 bis 21,
**dadurch gekennzeichnet, daß** die Ringsegmente (30) des Halteelementes (12) jeweils in Umfangsrichtung über einen Zwischenraum (48) voneinander beabstandet sind, wobei in jedem Zwischenraum (48) ein axialer Verbindungssteg (44) des Aufnahmekäfigs (40) angeordnet ist.

23. Steckkupplung nach Anspruch 22,
**dadurch gekennzeichnet, daß** das Federringelement (32) die Verbindungsstege (44) des Aufnahmekäfigs (40) zur Zentrierung des Halteelementes (12) bzw. der Ringsegmente (30) umschließt.

24. Steckkupplung nach einem derAnsprüche 16 bis 21,
**dadurch gekennzeichnet**, daßdieRingsegmente(30)des Halteelementes (12) in Umfangsrichtung aneinanderliegen.

25. Steckkupplung nach einem der Ansprüche 1 bis 24,
**dadurch gekennzeichnet, daß** dasHalteelement(12), inbesondere das Federringelement (32), radiale, elastisch verformbare Zentrieransatzelemente (50) aufweist.

## Claims

1. Plug-in coupling for pressure-medium systems, comprising two coupling parts, to be precise a housing part (2) and a plug part (4), it being the case that the plug part (4) can be plugged in a sealed manner into an accommodating opening (8) of the housing part (2) and can be arrested against release by means of a locking device (10), and that the locking device (10) has an elastically deformable retaining element (12) which is mounted on the side of one coupling part such that, for arresting the plug part (4) in the plugged-in state, it engages with a latching form fit behind a latching step (14) of the other coupling part, it being the case that the retaining element (12) is of annular design and comprises a plurality of individual ring segments (30), and a concentric spring-washer element (32) which subjects the ring segments (30) to a radially acting spring force (Fᵣ), such that during the plug-in operation, each ring segment (30) can be moved radially counter to or by the spring force (Fᵣ) of the spring-washer element (32), it being the case that blocking means (64) are formed for the automatically fixing retention of the retaining element (12) in its arresting position, in which it engages behind the latching step (14), in the case of the plug part (4) being subjected to a force (Fₐ) which acts axially in the release direction and is produced by mechanical tension or by internal pressure activation, **characterized in that** the blocking means (64) comprise oblique or essentially conical active surfaces (66, 68), which interact by axial abutment and belong to the retaining element (12) and the respective coupling part (2; 4), such that, by virtue of the force (Fₐ) acting axially in the release direction, each ring segment (30) of the retaining element (12) is subjected to a radial retaining force via the oblique active surfaces (66, 68).

2. Plug-in coupling according to Claim 1, **characterized in that** provided as an additional blocking means (64) ie an axially displaceable annular piston (70) which, by means of internal pressure activation, can be displaced axially, by way of a securing section (72), into an annular gap (73), which is coaxial with the retaining element (12), such that the ring segments (30) of the retaining element (12) are blocked in relation to their radial release movement as a result of radial abutment against the securing section (72) of the annular piston (70).

3. Plug-in coupling for pressure-medium systems, comprising two coupling parts, to be precise a housing part (2) and a plug part (4), it being the case that the plug part (4) can be plugged in a sealed manner into an accommodating opening (8) of the housing part (2) and can be arrested against release by means of a locking device (10), and that the locking device (10) has an elastically deformable retaining element (12) which is mounted on the side of one coupling part such that, for arresting the plug part (4) in the plugged-in state, it engages with a latching form fit behind a latching step (14) of the other coupling part, it being the case that the retaining element (12) is of annular design and comprises a plurality of individual ring segments (30), and a concentric spring-washer element (32) which subjects the ring segments (30) to a radially acting spring force (Fᵣ) , such that during the plug-in operation, each ring segment (30) can be moved radially counter to or by the spring force (Fᵣ) of the spring-washer element (32), it being the case that blocking means (64) are formed for the automatically fixing retention of the retaining element (12) in its arresting position, in which it engages behind the latching step (14), in the case of the plug part (4) being subjected to a force (Fₐ) which acts axially in the release direction and is produced by mechanical tension or by internal pressure activation, **characterized in that** provided as blocking means (64) is an axially displaceable annular piston (70) which, by means of internal pressure activation, can be displaced axially, by way of a securing section (72), into an annular gap (73), which is coaxial with the retaining element (12), such that the ring segments (30) of the retaining element (12) are blocked in relation to their radial release movement as a result of radial abutment against the securing section (72) of the annular piston (70).

4. Plug-in coupling according to Claim 3,
**characterized in that** additional blocking means (64) comprise oblique or essentially conical active surfaces (66, 68), which interact by axial abutment and belong to the retaining element (12) and the respective coupling part (2; 4), such that, by virtue of the force (Fₐ) acting axially in the release direction, each ring segment (30) of the retaining element (12) is subjected to a radial retaining force via the oblique active surfaces (66, 68).

5. Plug-in coupling according to one of Claims 1 to 4, **characterized in that** the individual ring segments (30) are designed themselves in a relatively non-elastic and dimensionally stable manner, to be precise preferably with an essentially rectangular or square ring cross section.

6. Plug-in coupling according to one of Claims 1 to 5, **characterized in that** the retaining element (12) comprises at least three, in particular four, radially symmetrical ring segments (30).

7. Plug-in coupling according to one of Claims 1 to 6, **characterized in that** the radially elastically deformable spring-washer element (32) is formed by at least one wire spring washer, helical spring washer, elastomeric shaped ring or the like.

8. Plug-in coupling according to one of Claims 1 to 7, **characterized in that** the retaining element (12) is mounted in the region of the accommodating opening (8) of the housing part (2) and the latching step (14) is formed on the plug part (4) - in particular by an outer annular groove (16).

9. Plug-in coupling according to Claim 8, **characterized in that** the spring-washer element (32) encloses the ring segment (30) and subjects them to a radially inwardly directed spring force (Fᵣ).

10. Plug-in coupling according to one of Claims 1 to 9, **characterized in that** the individual ring segments (30) consist of a solid material, in particular of plastic or metal.

11. Plug-in coupling according to Claim 10, **characterized in that**, on their radially outwardly oriented surface, the ring segments (30) each have a circumferentially running accommodating groove (36) for the spring-washer element (32).

12. Plug-in coupling according to one of Claims 1 to 9, **characterized in that** each ring segment (30) comprises at least two individual elements (38) located one behind the other, as seen in the plug-in direction.

13. Plug-in coupling according to Claim 12, **characterized in that** the individual elements (38) are of lamellar design and preferably consist of metal.

14. Plug-in coupling according to Claim 12 or 13, **characterized in that** in each case two to six, in particular five, similarly lamellar individual elements (38) butt against one another in an assembly-like manner.

15. Plug-in coupling according to Claim 14, **characterized in that** the spring-washer element (32) is designed as an elastic profiled ring which engages round the lamellar individual elements (38) radially and axially such that they are held together in an assembly-like arrangement.

16. Plug-in coupling according to one of Claims 1 to 15, **characterized in that** the ring segments (30) are secured in an accommodating cage (40).

17. Plug-in coupling according to one of Claims 1 to 16, **characterized in that** the housing part (2) comprises two releasably connected parts, to be precise a basic part (20) and a closure part (22), these two parts (20, 22) together bounding an accommodating chamber (24) for the retaining element (12).

18. Plug-in coupling according to Claim 17, **characterized in that** the closure part (22) is designed as an essentially hollow-cylindrical insert part (26), in particular as a cap screw, which, at least in certain regions, can be inserted into an opening of the basic part (20).

19. Plug-in coupling according to one of Claims 16 to 18, **characterized in that** the accommodating cage (40) is an integral constituent part of the closure part (22)

20. Plug-in coupling according to one of Claims 16 to 19, **characterized in that** the accommodating cage (40) is formed by radial slots with axial connecting webs (44), which are separated via slots, and an annular web (46) at the end.

21. Plug-in coupling according to one of Claims 16 to 19, **characterized in that** the accommodating cage (40) is formed by axial slots with an annular part which can be secured releasably at the end, preferably clipped on, for example a cap or a circlip element.

22. Plug-in coupling according to one of Claims 16 to 21, **characterized in that** the ring segments (30) of the retaining element (12) are spaced apart from one another in the circumferential direction in each case via an interspace (48), an axial connecting web (44) of the accommodating cage (40) being arranged in each interspace (48).

23. Plug-in coupling according to Claim 22, **characterized in that** the spring-washer element (32) enclosing the connecting webs (44) of the accommodating cage (40) for the purpose of centring the retaining element (12) or the ring segments (30).

24. Plug-in coupling according to one of Claims 16 to 21, **characterized in that** the ring segments (30) of the retaining element (12) butt against one another in the circumferential direction.

25. Plug-in coupling according to one of Claims 1 to 24, **characterized in that** the retaining element (12), in particular the spring-washer element (32), has radial, elastically deformable centring attachment elements (50).

## Revendications

1. Raccord emboîtable pour systèmes de fluides sous pression, comprenant deux panties d'accouplement, à savoir une partie boîtier (2) et une partie à emboîter (4), la partie à emboîter (4) pouvant être emboîtée de manière étanche dans une ouverture de réception (8) de la partie boîtier (2) et être verrouillée au moyen d'un dispositif de verrouillage (10) pour empêcher la séparation, et le dispositif de verrouillage (10) présentant un élément de retenue déformable élastiquement (12) qui est logé sur le côté d'une partie d'accouplement de telle sorte qu'il s'engage, pour bloquer la partie à emboîter (4) dans la position emboîtée, derrière un cran de blocage (14) de l'autre partie d'accouplement en bloquant de manière solidaire avec correspondance de forme, l'élément de retenue (12) étant conçu de forme annulaire et constitué de plusieurs segments annulaires isolés (30), ainsi que d'un élément de rondelle-ressort (32) concentrique, soumettant les segments annulaires (30) à une force élastique (Fᵣ) s'exerçant dans le sens radial, de telle sorte que, lors du processus d'emboîtement, chaque segment annulaire (30) est mobile dans le sens radial contre ou par la force élastique (Fᵣ) de l'élément de rondelle-ressort (32), des moyens de blocage (64) étant prévus pour tenir en le fixant automatiquement l'élément de retenue (12) dans sa position de blocage dans laquelle il est engagé derrière le cran de blocage (14) dans le cas où la partie à emboîter (4) est soumise à une force (Fₐ) s'exerçant dans le sens axial dans la direction de séparation, produite par traction mécanique ou par admission de pression intérieure, **caractérisé en ce que** les moyens de blocage (64) sont constitués de surfaces actives (66, 68) de l'élément de retenue (12) et de la partie d'accouplement correspondante (2;4) inclinées, respectivement essentiellement coniques, et coopérant par contact axial, de telle sorte que chaque segment annulaire (30) de l'e'lément de retenue (12) est soumis, par la force (Fₐ) s'exerçant dans le sens axial dans la direction de séparation, à une force de retenue radiale par l'intermédiaire des surfaces actives inclinées (66, 68).

2. Raccord à emboîtement selon la revendication 1, **caractérisé en ce qu'**il est prévu, comme moyen de blocage supplémentaire (64), un piston annulaire (70) mobile dans le sens axial qui peut être inséré, par admission de pression intérieure, avec un segment de sécurité (72) dans le sens axial dans une fente annulaire (73) coaxiale à l'élément de retenue (12), de telle sorte que les segments annulaires (30) de l'élément de retenue (12) sont bloqués, pour empêcher leur mouvement de séparation radial, par contact radial contre le segment de sécurité (72) du piston annulaire (70).

3. Raccord à emboîtement pour systèmes de fluides sous pression, comprenant deux parties d'accouplement, à savoir, une partie boîtier (2) et une partie à emboîter (4), la partie à emboîter (4) pouvant être emboîtée de manière étanche dans une ouverture de réception (8) de la partie boîtier (2) et être bloquée pour empêcher la séparation au moyen d'un dispositif de verrouillage (10), ledit dispositif de verrouillage (10) présentant un élément de retenue (12) déformable élastiquement, qui est logé sur le côté d'une partie d'accouplement de telle sorte qu'il s'engage, pour bloquer la partie à emboîter (4) dans la position d'emboîtement, derrière un cran de blocage (14) de l'autre partie d'accouplement en bloquant de manière solidaire avec correspondance de forme, ledit élément de retenue (12) étant conçu de forme annulaire et constitué de plusieurs segments annulaires isolés (30) ainsi que d'un élément de rondelle-ressort (32) concentrique, soumettant les éléments annulaires (30) à une force élastique (Fᵣ) s'exerçant dans le sens radial, de telle sorte que, lors du processus d'emboîtement, chaque segment annulaire (30) est mobile dans le sens radial contre ou sous l'effet de la force élastique (Fᵣ) de l'élément de rondelle-ressort (32), des moyens de blocage (64) étant conçus pour tenir l'élément de retenue (12) en le fixant automatiquement dans sa position de blocage dans laquelle il est engagé derrière le cran de blocage (14) dans le cas où la partie à emboîter (4) est soumise à une force (Fₐ) s'exerçant dans le sens axial dans la direction de séparation, produite par traction mécanique ou par admission de pression intérieure, **caractérisé en ce qu'**il est prévu, comme moyen de blocage (64), un piston annulaire (70) mobile dans le sens axial, qui par admission de pression intérieure, est inséré avec un segment de sécurité (72) dans le sens axial dans une fente annulaire (73) coaxiale à l'élément de retenue (12), de telle sorte que les segments annulaires (30) de l'élément de retenue (12) sont bloqués, pour empêcher leur mouvement radial de séparation, par contact radial contre le segment de sécurité (72) du piston annulaire (70).

4. Raccord à emboîtement selon la revendication 3, **caractérisé en ce que** des moyens de blocage supplémentaires (64) sont constitués de surfaces actives (66, 68) de l'élément de retenue (12) et de la partie d'accouplement (2;4) inclinées, respectivement essentiellement coniques, et coopérant par contact axial, de telle sorte que, par la force (Fₐ) s'exerçant dans le sens axial dans la direction de séparation, chaque segment annulaire (30) de l'élément de retenue (12) est soumis à une force de retenue radiale par l'intermédiaire des surfaces actives inclinées (66, 68).

5. Raccord à emboîtement selon l'une des revendications 1 à 4, **caractérisé en ce que** les différents segments annulaires (30) sont conçus eux-mêmes relativement non élastiques et indéformables et de préférence avec une section annulaire essentiellement rectangulaire ou carrée.

6. Raccord à emboîtement selon l'une des revendications 1 à 5, **caractérisé en ce que** l'élément de retenue (12) comprend au moins trois, en particulier quatre, segments annulaires à symétrie radiale (30).

7. Raccord à emboîtement selon l'une des revendications 1 à 6, **caractérisé en ce que** l'élément de rondelle-ressort (32) pouvant se déformer de manière élastique dans le sens radial est formé d'au moins une rondelle-ressort métallique, d'une rondelle-ressort cylindrique, d'une bague élastique en caoutchouc ou similaire.

8. Raccord à emboîtement selon l'une des revendications 1 à 7, **caractérisé en ce que** l'élément de retenue (12) est logé dans la zone de l'ouverture de réception (8) de la partie boîtier (2) et le cran de blocage (14) est formé sur la partie à emboîter (4), en particulier par une rainure annulaire extérieure (16).

9. Raccord à emboîtement selon la revendication 8, **caractérisé en ce que** l'élément de rondelle-ressort (32) entoure les segments annulaires (30) et les soumet à une force élastique (Fᵣ) orientée dans le sens radial vers l'intérieur.

10. Raccord à emboîtement selon l'une des revendications 1 à 9, **caractérisé en ce que** les différents segments annulaires (30) sont réalisés dans un matériau plein, en particulier en matière plastique ou en métal.

11. Raccord à emboîtement selon la revendication 10, **caractérisé en ce que** les segments annulaires (30) présentent, sur leur surface regardant vers l'extérieur dans le sens radial, une rainure de logement (36) orientée dans le sens périphérique pour l'élément de rondelle-ressort (32).

12. Raccord à emboîtement selon l'une des revendications 1 à 9, **caractérisé en ce que** chaque segment annulaire (30) comprend au moins deux éléments isolés (38) situés l'un derrière l'autre quand on regarde dans la direction d'emboîtement.

13. Raccord à emboîtement selon la revendication 12, **caractérisé en ce que** les éléments isolés (38) sont conçus en forme de lamelles et sont réalisés de préférence en métal.

14. Raccord à emboîtement selon la revendication 12 ou 13, **caractérisé en ce que** deux à six, en particulier cinq éléments isolés (38) en forme de lamelles similaires, sont disposés les uns à côté des autres pour former un ensemble.

15. Raccord à emboîtement selon la revendication 14, **caractérisé en ce que** l'élément de rondelle-ressort (32) est conçu comme une bague profilée élastique qui enveloppe les éléments isolés (38) en forme de lamelles dans le sens radial et le sens axial, de telle manière qu'ils sont maintenus ensemble pour constituer un agencement formant un ensemble.

16. Raccord à emboîtement selon l'une des revendications 1 à 15, **caractérisé en ce que** les segments annulaires (30) sont maintenus dans une cage de réception (40).

17. Raccord à emboîtement selon l'une des revendications 1 à 16, **caractérisé en ce que** la partie boîtier (2) comprend deux parties reliées de manière séparable, à savoir une partie de base (20) et une partie d'obturation (22), ces deux parties (20, 22) délimitant ensemble une chambre de logement (24) pour l'élément de retenue (12).

18. Raccord à emboîtement selon la revendication 17, **caractérisé en ce que** la partie d'obturation (22) est conçue comme une pièce d'insertion (26) essentiellement cylindrique creuse, pouvant s'insérer par endroits dans une ouverture de la pièce de base (20), en particulier comme un écrou-raccord.

19. Raccord à emboîtement selon l'une des revendications 16 à 18, **caractérisé en ce que** la cage de réception (40) fait partie intégrante de la partie d'obturation (22).

20. Raccord à emboîtement selon l'une des revendications 16 à 19, **caractérisé en ce que** la cage de réception (40) est formée par une fente radiale avec des barrettes de liaison (44) séparées par des fentes et une nervure annulaire (46) du côté extrémité.

21. Raccord à emboîtement selon l'une des revendications 16 à 19, **caractérisé en ce que** la cage de récéption (40) est formée par une fente axiale avec une partie annulaire maintenue de manière séparable du côté extrémité, de préférence clipsée, un capuchon ou un élément de circlips, par exemple.

22. Raccord à emboîtement selon l'une des revendications 16 à 21, **caractérisé en ce que** les segments annulaires (30) de l'élément de retenue (12) sont écartés les uns des autres dans le sens périphérique par un espace intermédiaire (48), une barrette de liaison axiale (44) de la cage de réception (40) étant disposée dans chaque espace intermédiaire (48).

23. Raccord à emboîtement selon la revendication 22, **caractérisé en ce que** l'élément de rondelle-ressort (32) entoure les barrettes de liaison (44) de la cage de réception (40) pour centrer l'élément de retenue (12), respectivement les segments annulaires (30).

24. Raccord à emboîtement selon l'une des revendications 16 à 21, **caractérisé en ce que** les segments annulaires (30) de 1'élément de retenue (12) sont situés les uns à côté des autres dans le sens périphérique.

25. Raccord à emboîtement selon l'une des revendications 1 à 24, **caractérisé en ce que** l'élément de retenue (12), en particulier l'élément de rondelle-ressort (32), présente des éléments d'embout de centrage (50) radiaux, pouvant se déformer élastiquement.
